# EUROPÄISCHE PATENTSCHRIFT

(11) **EP 2 607 271 B1**
(45) Veröffentlichungstag und Bekanntmachung des Hinweises auf die Patenterteilung: **22.11.2017**
(21) Anmeldenummer: 12198823.2
(22) Anmeldetag: 21.12.2012
(51) Int. Cl.: B65G 1/137

(54) **Verfahren zum Kommissionieren von Artikeln sowie dazu ausgebildete Kommissioniervorrichtung**
Method for picking articles and a picking device designed for this purpose
Procédé de préparation de commandes d'articles et dispositif de préparation de commandes conçu à cet effet

(30) Priorität: 23.12.2011 AT 18852011
(43) Veröffentlichungstag der Anmeldung: 26.06.2013
(73) Patentinhaber: TGW Logistics Group GmbH, 4600 Wels (AT)
(72) Erfinder: Hansl, Rudolf, 4020 Linz (AT)
(74) Vertreter: Burger, Hannes

(56) Entgegenhaltungen:
- DE-A1-102010 010 305
- JP-A- 4 116 001
- JP-A- 2010 018 369
- US-A1- 2009 288 996

## Beschreibung

Die Erfindung betrifft ein Verfahren zum Kommissionieren von Artikeln aus Lagerbehältern in Auftragsbehälter, wie dies in den Ansprüchen 1 und 2 angegeben ist, sowie eine Kommissioniervorrichtung, wie sie in Anspruch 13 definiert ist.

Eine Kommissionierstation für in Quell- bzw. Lagerbehältern enthaltene Artikel ist beispielsweise aus der EP 2 050 695 A1 bekannt. Dabei ist eine automatisierte erste Lagerbehälter-Transportvorrichtung zum Antransport von Lagerbehältern zu einer Andienungsvorrichtung und eine automatisierte zweite Lagerbehälter-Transportvorrichtung zum Abtransport von Lagerbehältern von der Andienungsvorrichtung vorgesehen, wobei die erste Lagerbehälter-Transportvorrichtung eine erste Aufnahmeeinheit für einen Lagerbehälter und die zweite Lagerbehälter-Transportvorrichtung eine zweite Aufnahmeeinheit für einen Lagerbehälter aufweist. Die Transportvorrichtungen weisen jeweils eine Antriebsstation auf, wobei die Antriebe der Antriebsstationen durch eine Steuereinheit sehr präzise gesteuert werden müssen. Insgesamt betrachtet sind der Steuerungsaufwand und der fördertechnische Aufwand relativ hoch bzw. ist der maschinenbauliche Aufbau relativ komplex, sodass die Herstellungskosten für eine solche Kommissionierstation relativ hoch sind.

Die WO 2011/107385 A1 beschreibt einen automatisierten Kommissionierarbeitsplatz zum manuellen Kommissionieren von Artikeln aus Lagerbehältern in zumindest einen Auftragsbehälter. Die Lagerbehälter weisen dabei sogenannte Schnelldreher-Lagerbehälter für schnelldrehende Artikel und Langsamdreher-Lagerbehälter für langsamdrehende Artikel auf. Die entsprechenden Lagerbehälter werden dabei dem Kommissionierarbeitsplatz zusammen mit dem mindestens einen Auftragsbehälter zugeführt. Zwischen zwei zueinander distanzierten Bereitstellungsvorrichtungen für Schnelldreher-Lagerbehälter sind dabei eine Mehrzahl von zusätzlichen Andienungs- bzw. Pufferplätzen zur temporären Andienung von weiteren Schnelldreher-Lagerbehältern vorgesehen. Die Pufferplätze sind nebeneinander und in mehreren, übereinander liegenden Ebenen derart angeordnet, dass die Kommissionierperson auf ergonomisch günstige Weise in jeden angedienten Lagerbehälter zur Entnahme eines zu kommissionierenden Artikels greifen kann. Mittels wenigstens einem Leuchtpfad wird dabei der Kommissionierperson visuell angezeigt, aus welchem angedienten Lagerbehälter ein Artikel zu entnehmen ist und an welchen Auftragsbehälter der entnommene Artikel abzugeben ist. Die damit erreichbare Performance ist jedoch nicht für alle Einsatzzwecke bzw. Kommissionieraufgaben ausreichend zufriedenstellend. Insbesondere hat dabei die Kommissionierperson in Abhängigkeit von den Vorgaben des variierenden Leuchtpfades einige für die Kommissionierperson unter Umständen zufallsartig anmutende bzw. sprunghaft erscheinende Kommissioniertätigkeiten zu erfüllen. Dadurch kann sich bei der Kommissionierperson ein inneres bzw. subjektives Gefühl von regellosen Vorgaben bzw. von Hektik einstellen, wodurch die erbringbare Kommissionierungsleistung beeinträchtigt werden kann.

Die US 2009/288996 A1 offenbart darüber hinaus ein Sortier- und Verteilsystem zum Sortieren von Artikeleinheiten gemäß Kundenaufträgen. Das System umfasst eine umlaufende, vorzugsweise in sich geschlossene Sortierfördertechnik mit einem Fördermittel, wobei das Fördermittel mit einer Vielzahl von Aufnahmeeinrichtungen verbunden ist, an die Artikeleinheiten abzugeben sind. Eine Vielzahl an Zielpositionen ist an die Sortierfördertechnik gekoppelt, und es können Artikeleinheiten an die Aufnahmeeinrichtungen in Übereinstimmung mit einem Kundenauftrag abgeben werden, wobei den Zielstellen Kundenaufträge zugewiesen sind. Mindestens eine Befüllstation befüllt die Aufnahmeeinrichtungen manuell mit Artikeleinheiten. Die Befüllstation weist eine Vielzahl von Befüllschächten auf, von denen jeder an seinem unteren Ende einen Öffnungsmechanismus umfasst, um in den Befüllschacht kommissionierte Artikeleinheiten automatisiert an die sich, vorzugsweise konstant, vorbeibewegenden Aufnahmeeinrichtungen abgeben zu können.

Der vorliegenden Erfindung liegt die Aufgabe zugrunde, ein Verfahren zum Kommissionieren von Artikeln aus Lagerbehältern in Auftragsbehälter zu schaffen, welches eine möglichst effiziente Kommissionierung unterschiedlicher Artikel ermöglicht, wobei die Leistungsfähigkeit der Kommissionierperson möglichst optimal genutzt werden soll. Analog dazu ist eine Kommissioniervorrichtung anzugeben, mit welcher dieses Kommissionierverfahren ohne baulich komplexe Automatisierungs- bzw. Förderanlagen umgesetzt werden kann.

Die erstgenannte Aufgabe der Erfindung wird durch die Maßnahmen und Merkmale gemäß Anspruch 1 oder 2 gelöst. Vorteilhaft ist dabei, dass mit relativ geringem, automatisierungstechnischem Aufwand eine relativ hohe Kommissionierleistung erzielt werden kann, ohne dass die Kommissionierperson überfordert wird. Insbesondere kann trotz relativ hoher Kommissionierperformance die Fehlerwahrscheinlichkeit bzw. die Anfälligkeit gegenüber fehlerhaften Kommissioniervorgängen möglichst gering gehalten werden. Erzielt werden diese vorteilhaften Wirkungen zum einen dadurch, dass eine Kommissionierstation bzw. eine Kommissioniervorrichtung, insbesondere ein Kommissionierarbeitsplatz, geschaffen ist, der durch eine günstige Anordnung der Artikelquellen bzw. Lagerbehälter und der Artikelziele, insbesondere der Auftragsbehälter, einen Kommissionierprozess ermöglicht, welcher Leerlaufzeiten bzw. Leerwege der Kommissionierperson eliminiert bzw. deutlich reduziert. Unter anderem wird diese vorteilhafte Wirkung durch die angegebene Positionierung der Quell- bzw. Lagerbehälter und der Ziel- bzw. Auftragsbehälter erreicht. Aber auch der angegebene Kommissionierprozess mit dem alternierenden Wechselspiel in Bezug auf Kommissionierweg bzw. Kommissionierstrecke und Quittierung eines durchgeführten Kommissionierauftrages bzw. Kommissionier-Teilauftrages trägt dazu bei, um die Kommissionierperformance zu steigern. Jedenfalls wird durch eine Minimierung bis hin zu einer im Extremfall eintretenden Eliminierung von Leerwegen der Kommissionierperson ein großes Leistungspotential ausgeschöpft bzw. erreicht. Weiters ist von Vorteil, dass dabei eine relativ geringe Leistungsanforderung bzw. Komplexität in Bezug auf die Zuführtechnik für die Quell- bzw. Lagerbehälter ausreichend ist. Darüber hinaus wird durch den abwechselnden, zeitversetzten Zugriff der Kommissionierperson auf zwei zueinander distanzierte Quell- bzw. Lagerbehälter eine ausreichend lange Zeitspanne zur Verfügung gestellt, innerhalb welcher nicht mehr benötigte Lagerbehälter durch neue bzw. andere Lagerbehälter ersetzt werden können, sodass nachfolgend von der Kommissionierperson ein weiterer Kommissionierauftrag ohne Zeitverzögerung bzw. mit möglichst geringen Wartezeiten ausgeführt werden kann. Insbesondere werden durch den zeitversetzten Zugriff der Kommissionierperson auf zwei zueinander distanzierte Quell- bzw. Lagerbehälter, die an die zu- oder abfördernde Fördertechnik gestellten Anforderungen relativ gering gehalten. Durch den in Bezug auf die Richtung wechselnden, bidirektionalen Kommissionierweg sind darüber hinaus unnötige Leerwege bzw. quasi unproduktive Rückwegzeiten bzw. Stillstandszeiten der Kommissionierperson eliminiert bzw. minimiert. Insbesondere ist dadurch eine Art "Ping-Pong-Arbeitsplatz" bzw. "Ping-Pong-Kommissioniermethode" geschaffen, welche unter optimaler Ausnutzung der Ressourcen der Kommissioniervorrichtung bzw. der Fördertechnik und der Leistungsfähigkeit der Kommissionierperson ablaufen kann.

Von Vorteil sind auch die Maßnahmen nach Anspruch 3, da dadurch Leerwege der Kommissionierperson bzw. zusätzliche Wege zur Quittierung oder Aufnahme eines neuen Kommissionierauftrages vermieden werden. Durch die alternierenden Richtungen in Bezug auf den Kommissionierweg werden also die als produktiv bzw. wertschöpfend anzusehenden Zeitfenster der Kommissionierperson maximiert. Außerdem wird dadurch der Arbeitskomfort für die Kommissionierperson gesteigert, da vor allem zusätzliche Wege für die Bestätigung eines durchgeführten, insbesondere plan- bzw. ordnungsgemäß durchgeführten Kommissionierauftrages bzw. Kommissionier-Teilauftrages vermieden werden. Weiters kann dadurch die Fehlerwahrscheinlichkeit möglichst gering gehalten werden, da sich die Kommissionierperson primär auf die auszuführenden Kommissionieraufträge konzentrieren kann.

Von besonderem Vorteil sind auch die Maßnahmen nach Anspruch 4, da dadurch eine optimierte Zeitausnutzung bzw. ein sogenanntes Timesharing zwischen Kommissionierperson und Fördertechnik geschaffen ist. Insbesondere wird dadurch von der Fördertechnik bereits ein anderer bzw. neuer Lagerbehälter herangeschafft bzw. entsprechend ausgetauscht, während die Kommissionierperson noch mit der Abarbeitung des aktuellen Kommissionierauftrages beschäftigt ist. Wesentlich ist dabei auch, dass der Quell- bzw. Lagerbehälter, aus welchem die entsprechenden Artikel entnommen wurden, solange in zugreifbarer Nähe ist bzw. für die Kommissionierperson zugreifbar bleibt, bis diese die Durchführung des Kommissionierauftrages bestätigt hat. Dadurch besteht für die Kommissionierperson die allfällig zu nutzende Möglichkeit, eine Unterzahl oder eine Überzahl an entnommenen Artikeln in Bezug auf den Quell- bzw. Lagerbehälter zu korrigieren bzw. auszugleichen. Das heißt, dass dadurch von der Kommissionierperson noch zusätzliche Artikeln aus dem Lagerbehälter entnommen werden können bzw. überzählige Artikel wieder in den Lagerbehälter zurückgelegt werden können, bevor der entsprechende Lagerbehälter mittels der Fördertechnik abtransportiert wird. Somit können neben einer hohen Kommissionier-Performance auch etwaige Irrtümer bzw. Fehlentnahmen der Kommissionierperson in Bezug auf den Quell- bzw. Lagerbehälter noch problemlos korrigiert werden.

Von Vorteil sind auch die Maßnahmen gemäß Anspruch 5, da dadurch die Kommissionierperson die Durchführung bzw. den Abschluss eines Kommissionierauftrages aktiv bzw. bewusst bestätigen muss, um eine Fortführung des Kommissionierprozesses einzuleiten. Fehlerhafte Kommissionierabläufe, wie sie beispielsweise bei automatisierter Annahme bzw. Detektierung des Abschlusses des Kommissionierauftrages entstehen können, werden dadurch ausgeschlossen. Ein weiterer Vorteil dieser Maßnahmen liegt darin, dass die Arbeitsplatzergonomie bzw. der Handlingkomfort relativ hoch ist, nachdem die Kommissionierperson keine weitläufigen Wegstrecken zurücklegen muss, um der Steuervorrichtung bzw. der Kommissioniervorrichtung zu signalisieren, dass der entsprechende Kommissionierauftrag bzw. Kommissionier-Teilauftrag abgeschlossen wurde.

Von Vorteil sind auch die Maßnahmen gemäß Anspruch 6, da dadurch eine relativ hohe Anzahl von Auftragsbehältern von der Kommissionierperson bearbeitet bzw. bedient werden kann, ohne dass weitläufige Wegstrecken zurückzulegen sind. Insbesondere kann dadurch innerhalb einer relativ kurzen Wegstrecke zwischen den zueinander distanzierten Bereitstellungsvorrichtungen für Lagebehälter eine relativ hohe Anzahl von Auftragsbehältern möglichst rasch erreicht werden.

Von Vorteil sind auch die Maßnahmen gemäß Anspruch 7, da dadurch der Kommissionierperson eindeutig bzw. unmissverständlich mitgeteilt werden kann, welcher oder welche der bereitgestellten Auftragsbehälter mit welcher Anzahl an entnommenen Artikeln zu beschicken sind. Insbesondere wird dadurch eine automatisierte Informationsübermittlung, ausgehend von der Steuervorrichtung bzw. von dessen Datenverwaltungssystem zur Kommissionierperson geschaffen. Vorzugsweise umfassen diese Signalisierungsmittel visuell wahrnehmbare, optische Anzeigeelemente. Alternativ oder in Kombination dazu ist es auch möglich, die entsprechenden Informationen der Kommissionierperson durch elektroakustische Elemente, insbesondere durch Kopfhörer oder Lautsprecher, mitzuteilen.

Von besonderem Vorteil sind auch die Maßnahmen nach Anspruch 8, da dadurch die Kommissionierleistung weiter gesteigert werden kann, ohne den fördertechnischen bzw. hardwaretechnischen Aufwand markant steigern zu müssen. Insbesondere wird durch die parallele Abarbeitung von Kommissionieraufträgen durch zumindest zwei Kommissionierpersonen in einfacher Art und Weise eine Hochleistungskommissionierstation mit erhöhter Kommissionierleistung geschaffen. Durch die zueinander entgegen gesetzten Arbeitsrichtungen wird dabei eine optimale Ausnutzung der Fördertechnik bzw. der hardwaretechnischen Komponenten der Kommissioniervorrichtung erzielt. Insbesondere wird dadurch ein sogenanntes "Timeand Hardware-Sharing" geschaffen. Dennoch ist ausreichend Freiraum für zumindest zwei Kommissionierpersonen vorhanden, sodass auch die Arbeitsplatzergonomie möglichst hoch ist bzw. bleibt.

Von Vorteil sind auch die Maßnahmen nach Anspruch 9, da dadurch in technisch einfacher Art und Weise eine eindeutige Zuordnung der Kommissionieraufträge bzw. eine relativ unmissverständliche Zuteilung von Kommissionieraufträgen zu den parallel bzw. gleichzeitig arbeitenden Kommissionierpersonen bewerkstelligt werden kann.

Vorteilhaft sind auch die Maßnahmen gemäß Anspruch 10, da dadurch die Anzahl der zu bedienenden Auftragsbehälter in einfacher Art und Weise gesteigert werden kann. Insbesondere kann bei Bedarf eine Erweiterung der Pufferplätze für Auftragsbehälter problemlos vorgenommen werden, ohne gravierende, hardwaretechnische Eingriffe in die bestehende Puffervorrichtung bzw. in die zentrale Kommissioniervorrichtung mit den zueinander distanzierten Bereitstellungsvorrichtungen zu verursachen.

Von Vorteil sind aber auch die Maßnahmen gemäß Anspruch 11, da dadurch ein günstiges Verhältnis zwischen Kommissionierstrecke bzw. Länge des Kommissionierweges und hardwaretechnischem Aufwand für die Fördertechnik bzw. für die Puffervorrichtung der Auftragsbehälter erforderlich ist. Insbesondere wird dadurch eine möglichst hohe Effizienz und ein günstiges Verhältnis in Bezug auf Kosten und Nutzen erzielt.
Durch die Maßnahmen gemäß Anspruch 12 wird in vorteilhafter Art und Weise erzielt, dass die jeweiligen Richtungswechsel bzw. die aufeinanderfolgend abzuarbeitenden Kommissionieraufträge solange ausgeführt werden, bis alle Kommissionieraufträge bzw. Kommissionier-Teilaufträge abgearbeitet sind oder wenigstens ein Auftragsbehälter mit den erforderlichen Artikeln beschickt ist.
Die zweitgenannte Aufgabe der Erfindung wird durch eine Kommissioniervorrichtung gemäß Anspruch 13 gelöst. Die damit erzielbaren Effekte und technischen Wirkungen sind den vorhergehenden und nachstehenden Beschreibungsteilen zu entnehmen. Zum besseren Verständnis der Erfindung wird diese anhand der nachfolgenden Figuren näher erläutert.
Es zeigen jeweils in stark vereinfachter, schematischer Darstellung:
- Fig. 1: ein Prinzipschaubild zur Verdeutlichung des angegebenen Kommissionierverfahrens;
- Fig. 2: eine beispielhafte Kommissionierstation mit spiegelbildlich angeordneten Kommissioniervorrichtungen zur Ausführung des Kommissionierverfahrens;
- Fig. 3: ein Prinzipschaubild einer Kommissioniervorrichtung mit einem Kommissionierpersonenleitsystem für parallel bzw. gleichzeitig arbeitende Kommissionierpersonen;
- Fig. 4: ein Prinzipschaubild einer Kommissionierstation mit mehreren Kommissioniervorrichtungen;
- Fig. 5: ein weiteres Ausführungsbeispiel einer Kommissioniervorrichtung, welche zur Umsetzung des angegebenen Kommissionierverfahrens ausgebildet ist.

Einführend sei festgehalten, dass in den unterschiedlich beschriebenen Ausführungsformen gleiche Teile mit gleichen Bezugszeichen bzw. gleichen Bauteilbezeichnungen versehen werden, wobei die in der gesamten Beschreibung enthaltenen Offenbarungen sinngemäß auf gleiche Teile mit gleichen Bezugszeichen bzw. gleichen Bauteilbezeichnungen übertragen werden können. Auch sind die in der Beschreibung gewählten Lageangaben, wie z.B. oben, unten, seitlich usw. auf die unmittelbar beschriebene sowie dargestellte Figur bezogen und sind diese Lageangaben bei einer Lageänderung sinngemäß auf die neue Lage zu übertragen.

Im Nachfolgenden wird die Erfindung in Zusammenhang mit Behältern, insbesondere Quell- bzw. Lagerbehältern und Ziel- bzw. Auftragsbehältern beschrieben. Der Begriff "Behälter" ist dabei nicht beschränkend anzusehen, sondern soll vielmehr als Beispiel für eine Vielzahl von möglichen Ladehilfsmitteln, wie beispielweise Tablar, Palette, Kartonage, usw. verstanden werden, die verwendet werden können, um Artikel bzw. Kommissioniergut zu lagern und zu transportieren.

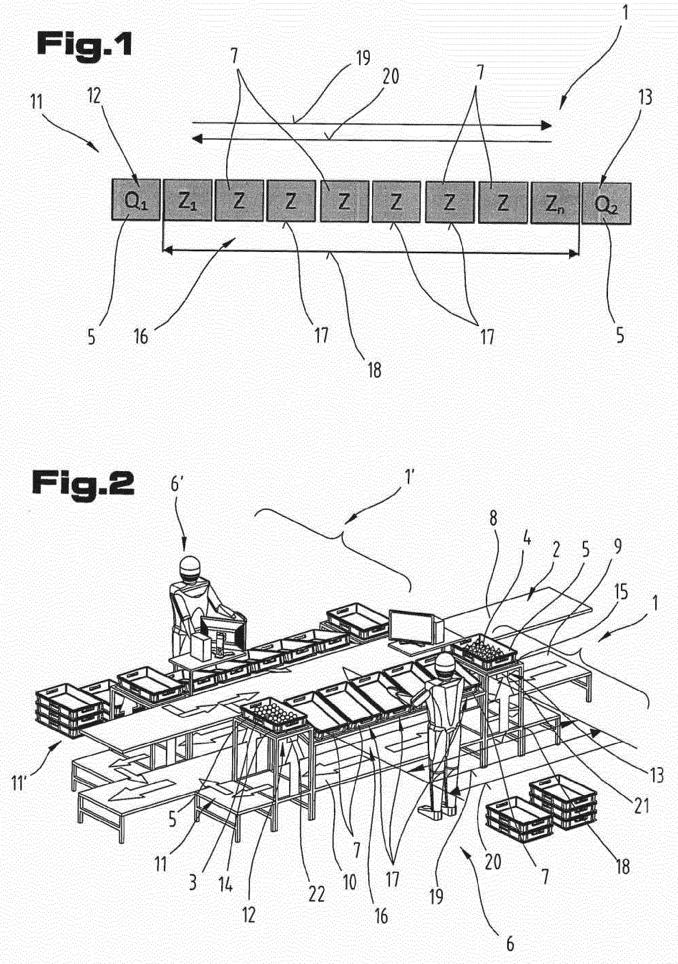

In den Fig. 1, 2 ist das Grundprinzip des erfindungsgemäßen Verfahrens bzw. zweier exemplarisch ausgeführter Kommissionierstationen 1, 1' veranschaulicht. Insbesondere sind bei der Ausgestaltung gemäß Fig. 2 zwei in Bezug auf eine automatisierte Fördertechnik 2, insbesondere in Bezug auf eine Förder- bzw. Transportvorrichtung, im Wesentlichen spiegelbildlich ausgeführte Kommissionierstationen 1, 1' vorgesehen. Dadurch kann die Leistungsfähigkeit der Kommissionierung erhöht werden bzw. kann die vorhandene, automatisierte Fördertechnik 2 zum Transport von Artikeln bzw. Waren zu und von den Kommissionierstationen 1, 1' stärker ausgelastet werden. Die beiden Kommissionierstationen 1, 1' sind dabei an den einander gegenüberliegenden Längsseiten einer zentral bzw. mittig durch die Kommissionierstationen 1, 1' verlaufenden Fördervorrichtung, insbesondere einer Rollen- oder Bandfördervorrichtung, für Ladehilfsmittel von Artikel bzw. Waren ausgebildet. Zweckmäßig ist es dabei, die einander gegenüberliegenden Kommissionierstationen 1, 1' in Bezug auf die Längsrichtung der gemeinsam genutzten Fördervorrichtung etwas zu versetzen. Durch diese Spiegelung der Kommissionierstation 1 bzw. 1' ist eine bessere Ausnutzung des Platzangebotes erzielt. Außerdem wird dadurch die Komplexität verringert und das Ausmaß an benötigter Fördertechnik 2 gering gehalten, was wiederum Potential für Platzeinsparungen bietet. Darüber hinaus kann durch den Längsversatz der Kommissionierstationen in Bezug auf die Förder- bzw. Längsrichtung der gemeinsam genutzten Fördervorrichtung die Wahrscheinlichkeit eines Engpasses beim automatisierten Zu- und Abtransport von Ladehilfsmitteln bzw. Artikeln verringert werden. Der Einfachheit wegen wird im Nachfolgenden hauptsächlich auf die Kommissionierstation 1 eingegangen. Die entsprechenden Darlegungen sind dabei auch auf die baulich gespiegelte Kommissionierstation 1' übertragbar.

Bei einer gattungsgemäßen Kommissionierstation 1 werden diverse, zu kommissionierende Artikel 3, 4 in Lagerbehältern 5 vorrätig gehalten. Wenigstens eine Kommissionierperson 6, 6' kommissioniert dabei die entsprechenden Artikel 3, 4 aus den Lagerbehältern 5 in vorliegende Auftragsbehälter 7. Dieser manuelle Kommissioniervorgang erfolgt entsprechend einer Mehrzahl von vorgegebenen Kommissionieraufträgen bzw. Kommissionierteilaufträgen, welche von der wenigstens einen Kommissionierperson 6, 6' abzuarbeiten sind.

Die an die Kommissionierstation 1, 1' angebundene bzw. anschließende Fördertechnik 2 sorgt für einen aktiven, zumindest teilautomatischen An- und Abtransport von Lagerbehältern 5 und gegebenenfalls auch von Auftragsbehältern 7 zu und von der Kommissionierstation 1, 1'. Die Fördertechnik 2 kann neben aktiven, insbesondere elektromotorisch oder fluidisch angetriebenen Fördervorrichtungen 8, 9, 10 selbstverständlich auch schwerkraftbasierende Förderbahnen bzw. Rutsch- oder Rollflächen aufweisen, um die Lagebehälter 5 und/oder Auftragsbehälter 7 an unterschiedliche bzw. variierende Positionen transferieren zu können.

Eine nicht dargestellte Steuervorrichtung, welche wenigstens eine softwaretechnisch und datentechnisch beeinflusste Recheneinheit umfasst, sorgt dabei für den reibungslosen bzw. ordnungsgemäßen Zu- und Abtransport von Lagerbehältern 5 und/oder Auftragsbehältern 7 zumindest in das Umfeld um die teilautomatische Kommissionierstation 1, 1' bzw. zumindest in die Nähe der Kommissionierperson 6, 6'. Jede zumindest teilautomatisierte und von wenigstens einer Kommissionierperson 6, 6' betreute Kommissionierstation 1, 1' umfasst eine Kommissioniervorrichtung 11, 11', welche durch mechanische und elektrotechnische Komponenten gebildet ist, um eine automationsbasierte Unterstützung für den von der Kommissionierperson 6, 6' auszuführenden Kommissionierprozess zu bieten.

Eine solche exemplarisch veranschaulichte Kommissioniervorrichtung 11 umfasst eine erste Bereitstellungsvorrichtung 12 und wenigstens eine weitere, zur ersten Bereitstellungsvorrichtung 12 distanzierte Bereitstellungsvorrichtung 13 für jeweils wenigstens einen Lagerbehälter 5. Die zumindest zwei zueinander distanzierten Bereitstellungsvorrichtungen 12, 13 stellen dabei eine temporäre Andienungs- bzw. Parkposition für wenigstens einen Lagerbehälter 5 für diverse Artikel 3, 4 dar. Die Bereitstellungsvorrichtung 12, 13 kann dabei als einfache Stellfläche 14, 15 für wenigstens eine Quell- bzw. Lagerbehälter 5 ausgeführt sein. Neben passiven Stellflächen 14, 15 ist es aber auch möglich, dass die Bereitstellungsvorrichtungen 12, 13 automatisierte oder teilautomatisierte, fördertechnische Vorrichtungen, beispielsweise Rollenförderer, Bandförderer, Schieberelemente, ein- und ausfahrbare Anschlag- bzw. Begrenzungselemente, und dergleichen, aufweisen, um einen automatisiert gesteuerten Übergang bzw. Wechsel, insbesondere einen Austausch, von Lagebehältern 5 zwischen der Bereitstellungsvorrichtung 12, 13 und der Zu- oder Abfördertechnik 2 zu bewerkstelligen. Diese für die Zu- und Abförderung einer Vielzahl von Lagerbehältern 5 mit verschiedenen Artikeln 3, 4 ausgebildete Fördertechnik 2 kann durch beliebige, aus dem Stand der Technik bekannte Fördersysteme gebildet sein.

Weiters umfasst die Kommissioniervorrichtung 11, 11' wenigstens eine Puffervorrichtung 16 zur vorübergehenden Platzierung von mit auftragsgemäßen Artikeln 3, 4 zu beschickenden Auftragsbehältern 7. Insbesondere sind mittels der Puffervorrichtung 16 mehrere Auftragsbehälter 7 temporär, insbesondere während der Dauer des jeweiligen Kommissionierprozesses, in einer für die Kommissionierperson 6 möglichst ergonomisch zugreifbaren Position und/oder Stellung gehalten. Ein solcher Kommissionierprozess kann dabei eine Mehrzahl von Kommissionieraufträgen bzw. Kommissionierteilaufträgen umfassen. Nach Abschluss des Kommissionierprozesses wird der fertig kommissionierte Auftragsbehälter 7 durch manuelles Abschieben und/oder automatisch an die abfördernde Fördertechnik 2 übergeben.

Die Puffervorrichtung 16 zwischen den beiden zueinander distanzierten Bereitstellungsvorrichtungen 12, 13 umfasst folglich eine Mehrzahl von Pufferplätzen 17 für die von der Kommissionierperson 6 manuell zu beschickenden Auftragsbehälter 7. Die Pufferplätze 17 für die Mehrzahl an Auftragsbehältern 7 sind zumindest aufeinanderfolgend bzw. seriell hintereinander angeordnet. Gemäß einer alternativen, vorteilhaften Ausführungsform kann die Puffervorrichtung 16 auch Pufferplätze 17 ausbilden, welche in zwei oder mehreren Ebenen übereinander ausgebildet sind. Insbesondere ist auch eine zeilen- und spaltenförmige Matrix von Pufferplätzen 17 für Auftragsbehälter 7 möglich, ohne dadurch vom Erfindungsgedanken abzuweichen. An den einander gegenüberliegenden Stirnenden der Puffervorrichtung 16 für die Auftragsbehälter 7 sind die voll- oder teilautomatisiert arbeitenden Bereitstellungsvorrichtungen 12, 13 ausgebildet, welche der Kommissionierperson 6 die jeweiligen Quell- bzw. Lagerbehälter 5 andienen.

Eine Distanz bzw. Strecke 18 zwischen den zueinander distanzierten Bereitstellungsvorrichtungen 12, 13 definiert dabei einen bidirektionalen Kommissionierweg 19, 20, welcher von wenigstens einer Kommissionierperson 6 zurückzulegen ist, um alle zu beschickenden Auftragsbehälter 7 zu erreichen und alle Kommissionieraufträge abwickeln zu können.

Ein zweckmäßiger Kommissionierprozess an einer derartigen Kommissioniervorrichtung 11 umfasst dabei wenigstens einen der nachfolgend erläuterten Verfahrensschritte: Die Kommissionierperson 6 entnimmt eine auftragsgemäße Menge von Artikeln 3 aus einem Lagerbehälter 5 an der ersten Bereitstellungsvorrichtung 12. Dieser Lagerbehälter 5 wird dabei der Kommissionierperson 6 unter Einbindung der Steuervorrichtung und der Fördertechnik 2 an der Bereitstellungsvorrichtung 12 angedient. Zweckmäßig ist es dabei, wenn an der Bereitstellungsvorrichtung 12, aber auch an der weiteren Bereitstellungsvorrichtung 13, jeweils nur ein Lagerbehälter 5 bereitgestellt wird, aus welchem die zu kommissionierenden Artikel 3, 4 zu entnehmen sind. Vorzugsweise werden dabei die zu kommissionierenden Artikel 3, 4 an den jeweiligen Bereitstellungsvorrichtungen 12, 13 sortenrein bereitgestellt, das heißt, dass vorzugsweise an jeder der Bereitstellungsvorrichtungen 12, 13 nur jeweils ein Lagerbehälter 5 mit insbesondere einer Sorte eines Artikels 3 bzw. 4 bereitsteht. Dadurch kann die Gefahr von Irrtümern bzw. Fehlkommissionierungen hintangehalten werden. Für den Fall, dass an den Bereitstellungsvorrichtungen 12, 13 jeweils mehrere Lagerbehälter 5 bereitstehen, wird unter Einbindung der Steuervorrichtung eindeutig identifiziert, aus welchem der Lagerbehälter 5 die entsprechende Anzahl an Artikeln 3, 4 zu entnehmen ist.

Die auftragsgemäß zu entnehmende Menge von Artikeln 3 aus dem an der ersten Bereitstellungsvorrichtung 12 bereitgestellten Lagebehälter 5 kann der Bedienperson durch beliebige Signalisierungsmittel, vorzugsweise durch visuell erfassbare Anzeigemittel, beispielsweise durch eine LCD-Anzeige, eine Sieben-Segment-Anzeige, einen Bildschirm, oder dergleichen, mitgeteilt werden.

Die Kommissionierperson 6 nimmt dann eine auftragskonforme Aufteilung der entnommenen Menge an Artikeln 3 in wenigstens einen der entlang des Kommissionierweges 19 angeordneten Auftragsbehälter 7 vor. Dabei kann es vorkommen, dass nur in einzelne der vorhandenen Auftragsbehälter 7 wenigstens ein Artikel 3 zu deponieren ist. Insbesondere hat sodann von der Kommissionierperson 6 eine spezifische Zuteilung von Artikeln 3 zu den entlang des Kommissionierweges 19 aufgestellten Auftragsbehältern 7 zu erfolgen, wobei die Menge der abzulegenden Artikel je Auftragsbehälter 7 zwischen Null und dem Maximum der aus dem Lagerbehälter 5 entnommenen Artikel 3 variieren kann. Die entlang des Kommissionierweges 19 bzw. entlang der Puffervorrichtung 16 aufgestellten Auftragsbehälter 7 können dabei - wie in Fig. 2 veranschaulicht - nacheinander bzw. seriell aufeinanderfolgend angeordnet sein. Es ist aber auch möglich, dass die aus wenigstens einem der Lagerbehälter 5 entnommenen Artikel 3 bzw. 4 in entlang des bidirektionalen Kommissionierweges 19, 20 nebeneinander und in zumindest zwei Ebenen übereinander angeordnete Auftragsbehälter 7 kommissioniert werden.

Ein von der Kommissionierperson 6 durchgeführter Kommissionierauftrag wird dann von der Kommissionierperson 6 in vorteilhafter Art und Weise an der oder im Nahbereich der weiteren Bereitstellungsvorrichtung 13 bewusst bzw. aktiv quittiert. Bei einem ordnungsgemäß durchgeführten Kommissionierauftrag hat die Kommissionierperson alle aus dem Quell- bzw. Lagerbehälter 5 entnommenen Artikel 3 auftragskonform den jeweiligen Auftragsbehältern 7 zugeteilt. Das heißt, dass eine Kommissionierperson 6 dem Lagerbehälter 5 an der ersten Bereitstellungsvorrichtung 5 die benötigte Menge an Artikeln 3 entnimmt, entlang des Kommissionierweges 19 in die spezifischen Auftragsbehälter 7 kommissioniert bzw. aufteilt und den durchgeführten Kommissionierauftrag am gegenüberliegenden Ende des Kommissionierweges 19, insbesondere an oder im Nahbereich der weiteren Bereitstellungsvorrichtung 13 bestätigt. Diese Bestätigung kann vorzugsweise durch Betätigung oder Aktivierung eines elektromechanisch oder softwaretechnisch ausgeführten Eingabemittels 21 an der im Nahbereich der weiteren Bereitstellungsvorrichtung 13 erfolgen, wie dies nachfolgend näher spezifiziert wird.

Am Ende des Kommissionierweges 19, insbesondere im Bereich der weiteren Bereitstellungsvorrichtung 13 entnimmt dann die Kommissionierperson 6 eine auftragsgemäße Menge von Artikeln 4, vorzugsweise eine entsprechend angezeigte oder eine anderweitig mitgeteilte Menge von Artikeln 4, aus dem an der weiteren Bereitstellungsvorrichtung 13 bereitgestellten Lagerbehälter 5. Daraufhin nimmt die Kommissionierperson 6 eine auftragsspezifische Aufteilung bzw. Zuteilung der entnommenen Menge an Artikeln 4 in wenigstens einen der entlang des gegengleich zu beschreitenden Kommissionierweges 20 angeordneten Auftragsbehälter 7 vor. Die entsprechenden Auftragsbehälter 7 an der Puffervorrichtung 16 sind dabei gleich geblieben, sofern in keinem der Auftragsbehälter 7 die vorgabegemäß zu deponierenden Artikel noch nicht enthalten sind. Ein vollständig mit Artikeln beschickter Auftragsbehälter 7 kann hingegen automatisch oder manuell an die Fördertechnik übergeben und abtransportiert werden. Gegebenenfalls wird unmittelbar danach, oder zu einem späteren Zeitpunkt, ein neuer bzw. leerer Auftragsbehälter 7 manuell oder automatisch an den frei gewordenen Pufferplatz 17 verbracht. Die Auftragsbehälter 7 können dabei - wie vorhergehend bereits dargelegt wurde - seriell aufeinanderfolgend und/oder matrixartig angeordnet sein, das heißt zeilen- und spaltenartig positioniert sein.

Nach der Quittierung des durchgeführten Kommissionierauftrages bzw. Kommissionierteilauftrages an der weiteren Bereitstellungsvorrichtung 13 und nach der Entnahme der mittels der Steuervorrichtung mitgeteilten Anzahl an anderen bzw. weiteren Artikeln 4 aus dem Lagerbehälter 5 an der weiteren Bereitstellungsvorrichtung 13, bewegt sich also die Kommissionierperson 7 ausgehend von der weiteren Bereitstellungsvorrichtung 13 in Richtung zur ersten Bereitstellungsvorrichtung 12. Das heißt, dass sich die Kommissionierperson ausgehend von der weiteren Bereitstellungsvorrichtung 13 wieder in Richtung zur ersten Bereitstellungsvorrichtung 12 vor- bzw. zurückarbeitet. Der durchgeführte Kommissionierauftrag wird dann von der Kommissionierperson 6 an der oder im Nahbereich der ersten Bereitstellungsvorrichtung 12 quittiert. Das heißt, dass eine Bestätigung über den soeben durchgeführten bzw. abgeschlossenen Kommissionierauftrag mittels einem weiteren Eingabemittel 22 an der oder im Nahbereich der ersten Bereitstellungsvorrichtung 12 erfolgt.

Entsprechend dem vorhergehend geschilderten Prozessablauf erfolgt also ein Abarbeitungsstart eines Kommissionierauftrages an einem ersten Ende des Kommissionierweges 19 und wird daraufhin der Abschluss dieses Kommissionierauftrages am gegenüberliegenden, weiteren Ende des Kommissionierweges 19 quittiert. Daraufhin wird an diesem weiteren Ende des Kommissionierweges 19 ein neuer bzw. weiterer Kommissionierauftrag gestartet und nach dessen Abschluss am ersten Ende bzw. an der ersten Bereitstellungsvorrichtung 12 quittiert. Das heißt, dass der Kommissionierweg 19, 20 bidirektional ausgeführt bzw. bidirektional von der Kommissionierperson 6 zu bedienen ist. Insbesondere werden von der Kommissionierperson 6 sowohl in der ersten, als auch in der entgegengesetzten, zweiten Richtung jeweils Kommissionieraufträge ausgeführt. Die Bestätigung eines durchgeführten Kommissionierauftrages erfolgt dabei an dem zum Kommissionierstart jeweils gegenüberliegenden Ende des Kommissionierweges 19 bzw. 20. Insbesondere ist dadurch ein Art von Ping-Pong-Arbeitsablauf geschaffen, mit welchem die Effizienz bzw. Geschwindigkeit des teilautomatisierten, manuell unterstützten Kommissonierablaufes gesteigert werden kann, ohne dadurch die Fehlerrate zu erhöhen bzw. nachteilig zu beeinflussen.

Zweckmäßig ist es, wenn infolge der Quittierung eines plan- bzw. auftragsgemäß durchgeführten Kommissionierauftrages im Nahbereich der jeweiligen Bereitstellungsvorrichtung 12 bzw. 13 am jeweils anderen Ende des Kommissionierweges 19 bzw. 20 ein Austausch- bzw. Bereitstellungsvorgang für einen anderen bzw. neuen Lagerbehälter ausgelöst bzw. vorgenommen wird. Das heißt, dass nach erfolgter Abarbeitung bzw. Kommissionierung und nach Quittierung des Kommissionierauftrages von Seiten der Kommissionierperson 6 der Lagerbehälter 5, aus welchem die zuvor kommissionierten Artikel 3 bzw. 4 stammen, automatisiert ausgetauscht bzw. durch einen anderen Lagebehälter 5 ersetzt wird, welcher die für den nachfolgend zu erledigenden Kommissionierauftrag erforderlichen Artikel bereitstellt. Der als nächstes abzuwickelnde Kommissionierauftrag wird in Bezug auf das zuvor dargelegte Kommissionierungs-Wechselspiel durch die an der distalen Bereitstellungsvorrichtung 13 neu zu bereitstellenden Artikel 4 definiert.

Zweckmäßig kann es dabei weiters sein, wenn die von der Kommissionierperson 6 bewusst bzw. aktiv vorzunehmende Quittierung eines durchgeführten Kommissionierauftrages durch manuelle Betätigung eines elektromechanisch oder softwaretechnisch ausgeführten Eingabemittels 21, 22 innerhalb einer Armeichweite um jede der Bereitstellungsvorrichtungen 12, 13 für die Lagebehälter 5 vorgenommen wird. Der Nahbereich um die Bereitstellungsvorrichtung 12 bzw. 13 ist vorzugsweise in etwa durch die Armreichweite einer Person bzw. der Kommissionierperson 6 definiert bzw. begrenzt, sodass keine zusätzlichen Wegstrecken zurückzulegen sind, um eine manuelle Quittierung durchführen zu können.

Alternativ oder in Kombination zu einer manuell durchzuführenden Quittierung durch Betätigung bzw. Aktivierung eines Eingabemittels 21, 22 ist auch eine sprachgesteuerte Quittierung eines durchgeführten oder abgeschlossenen Kommissionierauftrages möglich. Hierfür umfasst das Eingabemittel 21, 22 wenigstens ein nicht dargestelltes Mikrofon, beispielsweise an einem Headset, und eine elektronische Auswertungsvorrichtung für Sprachkommandos. Von besonderem Vorteil ist dabei, dass die Kommissionierperson 6 ihre Hände stets frei verfügbar hat, sodass die Leistungsfähigkeit bzw. der Arbeitskomfort des Kommissionierprozesses bzw. der Kommissioniervorrichtung 11 weiter gesteigert werden kann. Eine manuelle Quittierung von erledigten Kommissionieraufträgen kann bevorzugt durch die Hände, oder alternativ auch durch andere Körperteile der Kommissionierperson 6, wie z.B. durch die Hüfte, oder auch mittels den Füßen erfolgen, wobei in letzterem Fall wenigstens ein Fußtaster an den oder im Nahbereich der Bereitstellungsvorrichtungen 12, 13 ausgebildet ist.

Vorzugsweise weist jeder Lagerbehälter 5 nur sortenreine Artikel auf. Insbesondere werden Mischartikel in den Lagerbehältern 5 möglichst vermieden. Allenfalls können die Lagerbehälter 5 auch Trennelemente, insbesondere Trennwände umfassen, sodass ein Lagerbehälter 5 auch verschiedene, voneinander jedoch örtlich abgetrennte Artikel umfassen kann.

Ferner ist es möglich, dass ein Lagerbehälter 5 zwar typengleiche Artikel, wie z.B. Kleidungsstücke, insbesondere Hemden, einer bestimmten Konfektionsgröße enthält, dass jedoch unterschiedliche farbliche Versionen dieses Kleidungsstückes im Lagerbehälter 5 enthalten sind. Diesbezüglich kann die Kommissionierperson 6 mit relativ hoher Fehlersicherheit bzw. relativ rasch die für den jeweiligen Kommissionierauftrag erforderlichen Artikel-Unterscheidungen vornehmen. In vorteilhafter Art und Weise kann dadurch die Anzahl der benötigten Lagerbehälter 5 bzw. die Anzahl der Austauschzyklen reduziert werden, ohne dass die Gefahr von fehlerhaften Kommissionierungen maßgeblich ansteigt. Im Regelfall erfolgt die Quittierung der Durchführung eines Kommissionierauftrages an dem zum Kommissionierungsanfang gegenüberliegenden Ende des Kommissionierweges 19 bzw. 20. Insbesondere dann, wenn ein Lagerbehälter 5 durch die Artikelentnahme entleert wurde, der Lagerbehälter 5 also keine Artikel 3 bzw. 4 mehr enthält, kann die Quittierung auch an Ort und Stelle der letzten Entnahme erfolgen. Insbesondere ist es dann zweckmäßig, wenn eine Quittierung unmittelbar an jener Bereitstellungsvorrichtung 12 bzw. 13 erfolgt, an der die letzten Artikel 3 bzw. 4 entnommen wurden. Dadurch kann die Performance des Kommissionierverfahrens weiter verbessert werden.

Bei der in Fig. 2 dargestellten, beispielhaften Fördertechnik 2 werden die Artikelbehälter 5 den jeweiligen Bereitstellungsvorrichtungen 12, 13 in vertikaler Richtung zugeführt. Hierfür ist eine an sich bekannte Hubvorrichtung für wenigstens einen Artikelbehälter 5 vorgesehen. Alternativ dazu ist auch eine horizontale Zu- und/oder Abführung von Artikelbehältern 5 möglich. Bei den in Fig. 2 dargestellten Bereitstellungsvorrichtungen 12, 13 werden die Artikelbehälter 5 mittels den Fördervorrichtungen 9, 10 vorerst in einer bodennahen Ebene zu den Bereitstellungsvorrichtungen 12 bzw. 13 gefördert. Mittels dem Hubmechanismus bzw. der Hubvorrichtung der Bereitstellungsvorrichtung 12 bzw. 13 wird dann der Lagerbehälter 5 in eine optimale bzw. ergonomisch günstige Höhenposition, insbesondere in etwa auf Hüfthöhe der Kommissionierperson 6 angehoben und der Kommissionierperson 6 angedient. Nach dem Entnahmevorgang von Artikeln 3 bzw. 4 wird der nicht mehr benötigte Lagerbehälter 5 automatisch oder manuell auf die Fördervorrichtung 8 abgeschoben und abtransportiert. Dieser Abtransport von nicht mehr benötigten Lagerbehältern 5 kann dabei entsprechend der dargestellten, zweckmäßigen Fördertechnik 2, gemeinsam mit fertig kommissionierten Auftragsbehältern 7 via die Fördervorrichtung 8 bewerkstelligt werden. Es ist aber auch ein Wiederabsenken der nicht mehr benötigten Lagerbehälter 5 und ein Abtransport auf der bodennahen Ebene, insbesondere mittels den Fördervorrichtungen 10 und 9 denkbar. Je nach Leistungsanforderungen und unter Berücksichtigung ergonomischer Kriterien ist sowohl ein automatischer Abzug von Lager- und/oder Artikelbehältern 5, 7, als auch ein manuelles Zurückschieben auf die Abzugsbahn, insbesondere auf die Fördervorrichtung 8 denkbar.

Vor allem dann, wenn die von der Kommissionierperson 6 aus einem Lagerbehälter 5 zu entnehmende Menge an Artikeln 3 bzw. 4 relativ hoch ist bzw. deren Handhabbarkeit aufgrund hoher Masse und/oder hohem Volumens ungünstig ist, kann die Kommissioniervorrichtung 11 bzw. 11' weiters wenigstens ein Ladehilfsmittel aufweisen. Dieses Ladehilfsmittel (nicht dargestellt) kann durch einen Kommissionierwagen gebildet sein, welcher von der Kommissionierperson 6, 6' im Zuge der Kommissionierung entlang der Kommissionierwege 19, 20 hin und her bewegt wird. Der Kommissionierwagen kann dabei von der Kommissionierperson frei positionierbar sein. Vorzugsweise ist dieser Kommissionierwagen jedoch spurgeführt bzw. entlang der Puffervorrichtung 16 verschiebbar gehaltert. Entsprechend einer zweckmäßigen Ausgestaltung kann dieser Kommissionierwagen mittels der Hüfte der Kommissionierperson positioniert, insbesondere entlang der Puffervorrichtung 16 verfahren werden.

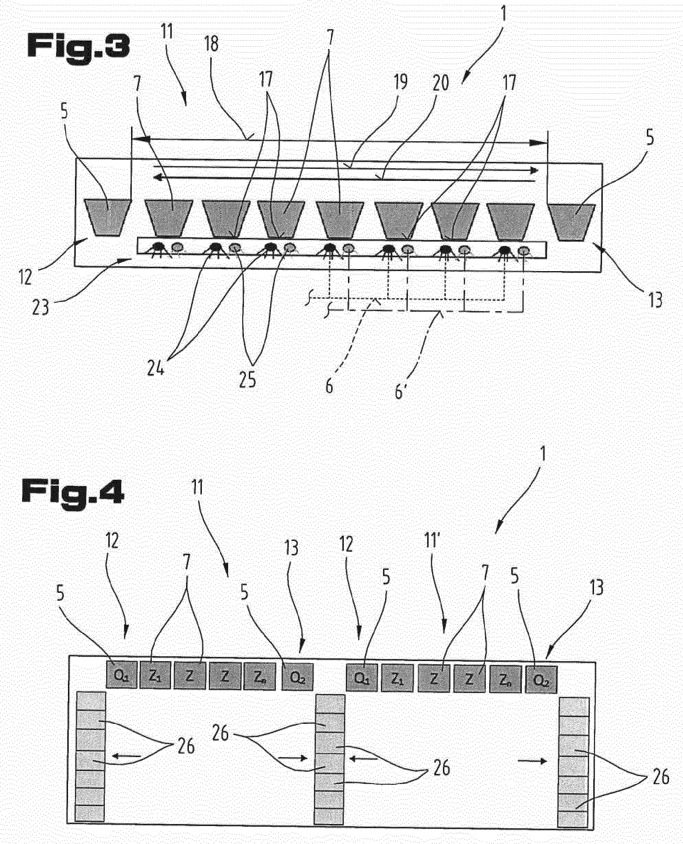

In Fig. 3 ist eine weitere schematische Darstellung einer Kommissioniervorrichtung 11 gezeigt. Für vorhergehend bereits beschriebene Teile werden dabei gleiche Bezugszeichen verwendet und sind die vorhergehenden Beschreibungen sinngemäß auf gleiche Teile mit gleichen Bezugszeichen übertragbar. Hierbei ist die Kommissioniervorrichtung 11 zusätzlich mit einem Kommissionierpersonenleitsystem 23 ausgestattet, mit welchem der Kommissionierperson die Kommissionierstückzahl und die Position des Auftragsbehälters 7 mitgeteilt werden. Die einzelnen Kommissioniertätigkeiten, welche in Bezug auf deren Abarbeitungsumfang auf die Strecke 18 zwischen den Bereitstellungsvorrichtungen 12, 13, das heißt auf einen einfachen bzw. unidirektionalen Kommissionierweg 19 bzw. 20 abgestellt sind, sind dabei von der Kommissionierperson sequentiell bzw. zeitlich aufeinanderfolgend abzuarbeiten.

Dieses Kommissionierpersonenleitsystem 23 umfasst eine Mehrzahl von Signalisierungsmitteln 24, 25, welche von der Kommissionierperson erfassbar sind, insbesondere visuell wahrnehmbar sind. Bevorzugt ist dabei jedem Pufferplatz 17 bzw. jedem an der Puffervorrichtung 16 bereitstellbaren Auftragsbehälter 7 jeweils wenigstens ein Signalisierungsmittel 24, 25 zugeordnet. Über dieses Signalisierungsmittel 24, 25 wird die Kommissionierperson 6 über die selektiv zu beschickenden Auftragsbehälter 7 und/oder über die Anzahl der jeweils abzulegenden Artikel je Auftragsbehälter 7 informiert. Diese Signalisierungsvorrichtungen 24, 25 können durch visuell wahrnehmbare Anzeigeelemente, beispielsweise durch LEDs, Sieben-Segment-Anzeigen, LCD-Displays oder dergleichen gebildet sein. Entsprechend einer vorteilhaften Ausführung ist vorgesehen, dass die Signalisierungsmittel 24, 25 zur Informationsausgabe in Bezug auf die Anzahl der zu deponierenden Artikel je spezifischem Auftragsbehälter 7 geeignet sind. Beispielsweise kann auch über ein Array aus LEDs oder ähnlichen Leuchtmitteln die Anzahl der zu deponierenden Artikel je Artikelbehälter 7 am spezifischen Pufferplatz 17 signalisiert werden.

Entsprechend einer zweckmäßigen, weiterführenden Maßnahme ist vorgesehen, dass anstehende Kommissionieraufträge durch zwei oder mehr Kommissionierpersonen 6, 6' gleichzeitig bzw. parallel entlang der entgegengesetzt verlaufenden Kommissionierwege 19, 20 abgearbeitet werden. Die jeweiligen Kommissionieraufträge werden dabei an den gegenüberliegenden Enden der Strecke 18 bzw. der Kommissionierwege 19, 20 gestartet, sodass die Kommissionieraufträge durch die Kommissionierpersonen 6, 6' in zueinander entgegengesetzten Richtungen entlang der jeweiligen Kommissionierwege 19, 20 abgearbeitet werden. Die jeweilige Zuordnung von Kommissionieraufträgen zu den beiden gleichzeitig oder parallel arbeitenden Kommissionierpersonen 6, 6' kann dabei durch farblich oder symbolisch unterscheidbare Signalisierungen bzw. Signalisierungsmittel 24 und 25 an einem visuell wahrnehmbaren Kommissionierpersonenleitsystem 23 vorgenommen werden. Anstelle farblicher oder symbolischer Unterscheidungskraft bzw. Differenzierungsmerkmale der Signalisierungsmittel 24, 25 in Bezug auf die jeweiligen Kommissionierpersonen 6, 6' ist es auch möglich, dass andere Unterscheidungsmaßnahmen zur Auftragszuordnung getroffen werden. Insbesondere können auch akustische Signalisierungsmittel vorgesehen sein, wobei die jeweiligen Kommissionierpersonen 6, 6' bevorzugt mit Headsets bzw. mit Kopfhörern für Funkempfang ausgestattet sind, wobei jeder Kommissionierperson 6, 6' die für sie individuellen Kommissionieraufträge von der Steuervorrichtung (nicht dargestellt) akustisch übertragen werden. Ein bedeutender Vorteil liegt dabei darin, dass die Kommissionierpersonen 6, 6' die für Kommissionierungsaufgaben benötigten Hände möglichst lange bzw. relativ häufig frei haben. Ferner ist eine Kombination aus visuellen und akustischen Auftragsübermittlungen denkbar, sodass auch audiovisuelle Übermittlungen von Informationen an die Kommissionierpersonen 6, 6' in Bezug auf die jeweiligen Kommissionieraufträge möglich sind.

In Fig. 4 ist eine Weiterbildung der Kommissioniervorrichtung 11 bzw. 11' veranschaulicht, wobei für vorhergehend bereits beschriebene Teile gleiche Bezugszeichen verwendet werden und die vorhergehenden Beschreibungsteile sinngemäß auf gleiche Teile mit gleichen Bezugszeichen übertragbar sind. Hierbei sind zusätzlich zu den Pufferplätzen 17 zwischen den zueinander distanzierten Bereitstellungsvorrichtungen 12, 13 weitere Pufferplätze 26 für Auftragsbehälter 7 vorgesehen. Diese weiteren Pufferplätze 26 für Auftragsbehälter 7 sind in Bezug auf eine Boden- bzw. Aufstandsebene in einem zumindest annähernd rechten Winkel an wenigstens eine der Bereitstellungsvorrichtungen 12, 13 angeschlossen bzw. angereiht. Dadurch wird eine in Draufsicht im Wesentlichen L- oder U-förmige Kommissioniervorrichtung 11 bzw. 11' gebildet. Durch serielle Aneinanderreihung mehrerer Kommissioniervorrichtungen 11, 11' entsteht eine Kommissionierstation 1, 1' mit im Wesentlichen kammförmiger Umrissstruktur.

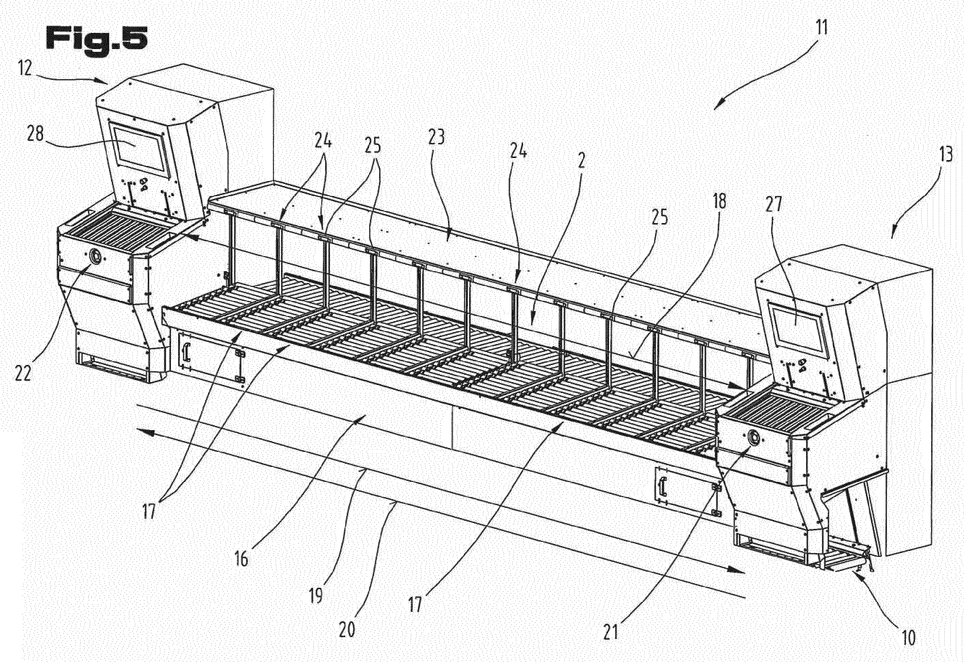

Fig. 5 zeigt ein weiteres Ausführungsbeispiel einer Kommissioniervorrichtung 11 zur Umsetzung des angegebenen Kommissionierverfahrens. Für vorhergehend bereits beschriebene Teile werden dabei gleiche Bezugszeichen verwendet und sind die vorhergehenden Beschreibungsteile sinngemäß auf gleiche Teile mit gleichen Bezugszeichen zu übertragen.

Hierbei sind die Bereitstellungsvorrichtungen 12, 13 für nicht dargestellte Lagerbehälter durch modular ausgebildet Andienungseinheiten gebildet. Die Eingabemittel 21, 22 sind dabei durch elektromechanische Schaltelemente, insbesondere durch Taster, an der Frontseite der Bereitstellungsvorrichtungen 12, 13 ausgeführt. Alternativ oder in Kombination dazu ist es auch möglich, die Eingabeelemente 21, 22 via wenigstens einen Bildschirm umzusetzen. Bei der dargestellten Ausführungsform ist je Bereitstellungsvorrichtung 12, 13 jeweils ein berührungssensitiver Bildschirm 27, 28 vorgesehen, an welchen wenigstens ein softwaretechnisches Eingabemittel zur manuellen Quittierung von durchgeführten Kommissionieraufträgen implementiert sein kann.

Das Kommissionierpersonenleitsystem 23 kann zweckmäßigerweise die Bildschirme 27, 28 und/oder die den Pufferplätzen 17 der Puffervorrichtung 16 jeweils zugeordneten Signalisierungselemente 24, 25 umfassen. Mittels den Bildschirmen 27, 28, welche Teilkomponenten der nicht dargestellten Steuervorrichtung darstellen, können der Kommissionierperson in einfacher Art und Weise die abzuarbeitenden Kommissionieraufträge mitgeteilt bzw. angezeigt werden.

Bei der Ausgestaltung gemäß Fig. 5 sind die Pufferplätze 17 der Puffervorrichtung durch gesteuert aktivier- und deaktivierbare Fördervorrichtungen gebildet. Diese ermöglichen einen automatischen Abzug von fertig beschickten Auftragsbehältern (nicht dargestellt) und/oder eine automatische Andienung von leeren oder unvollständig beschickten, von der Kommissionierperson auftragsgemäß zu beschickenden Auftragsbehältern (nicht dargestellt).

Die beispielhafte Kommissioniervorrichtung 11 gemäß Fig. 5, aber auch die Ausführung gemäß Fig. 2, ist geeignet, in Zusammenwirken mit wenigstens einer Kommissionierperson das vorhergehend beschriebene, aber auch das nachfolgend angegebene Kommissionierverfahren durchzuführen bzw. umzusetzen.

Entsprechend einem weiteren, vorteilhaften Kommissionierungsablauf in Verbindung mit der Kommissioniervorrichtung 11 ist vorgesehen, dass durch die Kommissionierperson aus einem an der ersten Bereitstellungsvorrichtung 12 angedienten Lagerbehälter eine auftragsgemäße Menge von ersten Artikeln entnommen wird. Daraufhin wird von der Kommissionierperson die Entnahme der auftragsgemäßen Menge quittiert, was mittels eines elektromechanisch oder softwaretechnisch ausgeführten Eingabemittels 22 an der oder im Nahbereich der ersten Bereitstellungsvorrichtung 12 erfolgt. Basierend auf dieser bewussten bzw. benutzerseitigen Quittierung der Entnahme der benötigten bzw. zu verteilenden Artikel, wird von einer elektronischen Steuervorrichtung (nicht dargestellt) der Kommissioniervorrichtung 11 bzw. des Gesamtsystems ein automatisierter Austausch des Lagerbehälters an der ersten Bereitstellungsvorrichtung 12 durch einen anderen Lagerbehälter initiiert bzw. durchgeführt. Dieser andere Lagerbehälter enthält Artikel, welche für die Abarbeitung des übernächsten Kommissionierauftrages bzw. Kommissionier-Teilauftrages benötigt werden.

Die auftragsspezifisch bzw. vorgabegemäß entnommene Menge an ersten Artikeln wird dann von der Kommissionierperson wenigstens einem der entlang des Kommissionierweges 19 angeordneten Auftragsbehälter zugeteilt. Insbesondere werden die entnommenen Artikel auftragsspezifisch auf die jeweiligen Auftragsbehälter aufgeteilt. Die Menge an Artikeln je Auftragsbehälter kann somit ein Wert zwischen 0 bzw. 1 und Maximum sein.

Nach erfolgter Zuteilung der ersten Artikel an die Auftragsbehälter entnimmt die Kommissionierperson aus dem an der weiteren Bereitstellungsvorrichtung 13 angedienten Lagerbehälter eine auftragsgemäße Menge an weiteren, insbesondere andersartigen Artikeln, um damit den nächsten Kommissionierauftrag bzw. Kommissionier-Teilauftrag abwickeln zu können. Die Kommissionierperson quittiert dabei an Ort und Stelle, insbesondere an der weiteren Bereitstellungsvorrichtung 13 die Entnahme der auftragsgemäßen Artikel. Diese Quittierung erfolgt bevorzugt durch bewusste Aktivierung bzw. aktive Betätigung eines elektromechanisch oder softwaretechnisch ausgeführten Eingabemittels 21 an der oder im Nahbereich der weiteren Bereitstellungsvorrichtung 13. Daraufhin wird von der elektronischen Steuervorrichtung ein automatisierter Abzug des Lagerbehälters bzw. ein Austausch des nicht mehr benötigten Lagerbehälters an der weiteren Bereitstellungsvorrichtung 13 durch einen anderen Lagerbehälter mit anderen Artikeln eingeleitet bzw. ausgeführt. Die in diesem Lagerbehälter enthalten Artikel werden dabei für die Abarbeitung des übernächsten Kommissionierauftrages bzw. Kommissionier-Teilauftrages benötigt und entsprechend bereitgestellt.

Die an der weiteren Bereitstellungsvorrichtung 13 von der Kommissionierperson entnommenen bzw. aufgenommenen Artikel werden dann in wenigstens einen der entlang des Kommissionierweges 20 angeordneten Auftragsbehälter auftragsgemäß zugeordnet bzw. aufgeteilt, wobei die Kommissionierungsrichtung ausgehend von der weiteren Bereitstellungsvorrichtung 13 in Richtung zur ersten Bereitstellungsvorrichtung 12 verläuft bzw. zurückgeht. Damit ist ein vollständiges Kommissionierungswechselspiel abgeschlossen und die Kommissionierperson befindet sich wieder an der Ausgangsposition, insbesondere an der oder im Nahbereich der ersten Bereitstellungsvorrichtung 12, wo sie einen weiteren Kommissionierauftrag annehmen bzw. entsprechend starten und abarbeiten kann. Für die weitere Abarbeitung bewegt sich die Kommissionierperson ausgehend von der ersten Bereitstellungsvorrichtung 12 wieder in Richtung zur distalen, weiteren Bereitstellungsvorrichtung 13. Dieses Wechselspiel kann je nach Umfang der Kommissionieraufgabe mehrmals ablaufen.

Insbesondere werden die anfangs erläuterten Verfahrensschritte Entnehmen, Aufteilen und Quittieren bzw. die zuvor angeführten Verfahrensschritte Entnehmen, Quittieren und Aufteilen, sooft wiederholt, bis alle Kommissionieraufträge erledigt sind bzw. bis die komplette Kommissionieraufgabe vollständig abgearbeitet ist. Dabei wird von der Kommissionierperson nach jeder abgeschlossenen Kommissioniersequenz ein Richtungswechsel in Bezug auf den Kommissionierweg 19 bzw. 20 zwischen den Bereitstellungsvorrichtungen 12, 13 ausgeführt.

Die von der Kommissionierperson abwechselnd zu beschreitenden, gegengleichen Kommissionierwege 19, 20 verbinden dabei die zueinander distanzierten Bereitstellungsvorrichtungen 12, 13 auf direktem bzw. kürzestem Weg. Die Kommissionierwege 19, 20 entsprechen dabei in ihrer Länge wenigstens annähernd der Distanz bzw. Strecke 18 zwischen den Bereitstellungsvorrichtungen 12, 13 bzw. der Längserstreckung der Puffervorrichtung 16. Effizient bzw. relativ günstig ist es, wenn die Strecke 18 oder der Kommissionierweg 19 bzw. 20 zwischen den zur Puffervorrichtung 16 distal gegenüberliegenden Bereitstellungsvorrichtungen 12, 13 eine Länge zwischen 2 m und 20 m, insbesondere zwischen 3 m und 10 m aufweist.

Der Ordnung halber sei abschließend darauf hingewiesen, dass zum besseren Verständnis des Aufbaus der Kommissioniervorrichtung 11 diese bzw. deren Bestandteile teilweise unmaßstäblich und/oder vergrößert und/oder verkleinert dargestellt wurden.

### Bezugszeichenaufstellung

- 1, 1': Kommissionierstation
- 2: Fördertechnik
- 3: Artikel
- 4: Artikel
- 5: Lagerbehälter

- 6, 6': Kommissionierperson
- 7: Auftragsbehälter
- 8: Fördervorrichtung
- 9: Fördervorrichtung
- 10: Fördervorrichtung

- 11, 11': Kommissioniervorrichtung
- 12: Bereitstellungsvorrichtung
- 13: Bereitstellungsvorrichtung
- 14: Stellfläche
- 15: Stellfläche

- 16: Puffervorrichtung
- 17: Pufferplätze
- 18: Strecke
- 19: Kommissionierweg
- 20: Kommissionierweg

- 21: Eingabemittel
- 22: Eingabemittel
- 23: Kommissionierpersonenleitsystem
- 24: Signalisierungsmittel
- 25: Signalisierungsmittel

- 26: Pufferplatz
- 27: Bildschirm
- 28: Bildschirm

## Patentansprüche

1. Verfahren zum Kommissionieren von Artikeln (3, 4) aus Lagerbehältern (5) in Auftragsbehälter (7) durch eine Kommissionierperson (6) gemäß vorgegebenen Kommissionieraufträgen, mit einer Kommissioniervorrichtung (11), welche eine erste und wenigstens eine weitere Bereitstellungsvorrichtung (12, 13) für zu- und abzufördernde Lagerbehälter (5), und eine Puffervorrichtung (16) für die Auftragsbehälter (7) mit zwischen den Bereitstellungsvorrichtungen (12, 13) angeordneten Pufferplätzen (17) für die Auftragsbehälter (7) umfasst, wobei die Strecke (18) zwischen den zueinander distanzierten Bereitstellungsvorrichtungen (12, 13) einen Kommissionierweg (19, 20) für die Kommissionierperson (6) definiert, **gekennzeichnet, durch**
- Entnehmen einer auftragsgemäßen Menge von Artikeln (3) aus einem Lagerbehälter (5) an der ersten Bereitstellungsvorrichtung (12),
- auftragsspezifische Aufteilung der entnommenen Menge an Artikeln (3) in wenigstens einen der entlang des zu der weiteren Bereitstellungsvorrichtung (13) führenden Kommissionierweges (19) angeordneten Auftragsbehälter (7),
- Quittieren des durchgeführten Kommissionierauftrages durch die Kommissionierperson (6) an der oder im Nahbereich der weiteren Bereitstellungsvorrichtung (13),
- Entnehmen einer auftragsgemäßen Menge von Artikeln (4) aus einem Lagerbehälter (5) an der weiteren Bereitstellungsvorrichtung (13),
- auftragsspezifische Aufteilung der entnommenen Menge an Artikeln (4) in wenigstens einen der entlang des zu der ersten Bereitstellungsvorrichtung (12) führenden Kommissionierweges (20) angeordneten Auftragsbehälter (7) ausgehend von der weiteren Bereitstellungsvorrichtung (13) in Richtung zur ersten Bereitstellungsvorrichtung (12),
- Quittierung des durchgeführten Kommissionierauftrages durch die Kommissionierperson (6) an der oder im Nahbereich der ersten Bereitstellungsvorrichtung (12).

2. Verfahren zum Kommissionieren von Artikeln (3, 4) aus Lagerbehältern (5) in Auftragsbehälter (7) durch eine Kommissionierperson (6) gemäß vorgegebenen Kommissionieraufträgen, mit einer Kommissioniervorrichtung (11), welche eine erste und wenigstens eine weitere Bereitstellungsvorrichtung (12, 13) für zu- und abzufördernde Lagerbehälter (5), und eine Puffervorrichtung (16) für die Auftragsbehälter (7) mit zwischen den Bereitstellungsvorrichtungen (12, 13) angeordneten Pufferplätzen (17) für die Auftragsbehälter (7) umfasst, wobei die Strecke (18) zwischen den zueinander distanzierten Bereitstellungsvorrichtungen (12, 13) einen Kommissionierweg (19, 20) für die Kommissionierperson (6) definiert, **gekennzeichnet, durch**
- Entnehmen einer auftragsgemäßen Menge von Artikeln (3) durch die Kommissionierperson (6) aus einem Lagerbehälter (5) an der ersten Bereitstellungsvorrichtung (12),
- aktives Quittieren der auftragsgemäß entnommenen Menge von Artikeln (3) durch die Kommissionierperson (6) mittels einem elektromechanisch oder softwaretechnisch ausgeführten Eingabemittel (22) an der oder im Nahbereich der ersten Bereitstellungsvorrichtung (12), woraufhin von einer elektronischen Steuervorrichtung ein automatisierter Austausch des Lagerbehälters (5) an der ersten Bereitstellungsvorrichtung (12) durch einen anderen Lagebehälter (5) initiiert wird,
- auftragsspezifische Aufteilung der entnommenen Menge an Artikeln (3) durch die Kommissionierperson (6) in wenigstens einen der entlang des zu der weiteren Bereitstellungsvorrichtung (13) führenden Kommissionierweges (19) angeordneten Auftragsbehälter (7),
- Entnehmen einer auftragsgemäßen Menge von Artikeln (4) durch die Kommissionierperson (6) aus einem Lagerbehälter (5) an der weiteren Bereitstellungsvorrichtung (13),
- aktives Quittieren der auftragsgemäß entnommenen Menge von Artikeln (4) durch die Kommissionierperson (6) mittels einem elektromechanisch oder softwaretechnisch ausgeführten Eingabemittel (21) an der oder im Nahbereich der weiteren Bereitstellungsvorrichtung (13), woraufhin von der elektronischen Steuervorrichtung ein automatisierter Austausch des Lagerbehälters (5) an der weiteren Bereitstellungsvorrichtung (13) durch einen anderen Lagebehälter (5) initiiert wird,
- auftragsspezifische Aufteilung der entnommenen Menge an Artikeln in wenigstens einen der entlang des zu der ersten Bereitstellungsvorrichtung (12) führenden Kommissionierweges (20) angeordneten Auftragsbehälter (7) ausgehend von der weiteren Bereitstellungsvorrichtung (13) in Richtung zur ersten Bereitstellungsvorrichtung (12).

3. Verfahren nach Anspruch 1, **gekennzeichnet durch** einen Abarbeitungsstart eines Kommissionierauftrages an einem ersten Ende des Kommissionierweges (19; 20) und durch Quittieren des Abschlusses dieses Kommissionierauftrages am gegenüberliegenden, weiteren Ende des Kommissionierweges (19; 20), woraufhin am weiteren Ende des Kommissionierweges (19; 20) ein weiterer Kommissionierauftrag gestartet und nach dessen Abschluss am ersten Ende quittiert wird.

4. Verfahren nach Anspruch 1 oder 2, **gekennzeichnet durch** Auslösen eines Bereitstellungsvorganges für einen anderen Lagerbehälter (5) am jeweils anderen Ende des Kommissionierweges (19; 20) infolge der Quittierung eines auftragsgemäß durchgeführten Kommissionierauftrages am gegenüberliegenden Ende des Kommissionierweges (19; 20).

5. Verfahren nach einem der vorhergehenden Ansprüche, **dadurch gekennzeichnet, dass** die Quittierung eines durchgeführten Kommissionierauftrages durch manuelle Betätigung eines elektromechanisch oder softwaretechnisch ausgeführten Eingabemittels (21, 22) innerhalb einer Armreichweite um jede der Bereitstellungsvorrichtungen (12, 13) für Lagerbehälter (5) vorgenommen wird.

6. Verfahren nach einem der vorhergehenden Ansprüche, **dadurch gekennzeichnet, dass** die aus Lagerbehältern (5) entnommenen Artikel (3, 4) in entlang des Kommissionierweges (19; 20) nebeneinander und in zumindest zwei Ebenen übereinander angeordnete Auftragsbehälter (7) kommissioniert werden.

7. Verfahren nach einem der vorhergehenden Ansprüche, **dadurch gekennzeichnet, dass** ein Kommissionierpersonenleitsystem (23) ausgebildet ist, mit welchem der Kommissionierperson (6) die abzuarbeitenden Kommissionieraufträge mitgeteilt werden, wobei das Kommissionierpersonenleitsystem (23) von der Kommissionierperson (6) wahrnehmbare Signalisierungsmittel (24, 25) umfasst, über welche die Kommissionierperson (6) über selektiv zu beschickende Auftragsbehälter (7) und über die Anzahl der jeweils abzulegenden Artikel (3; 4) informiert wird.

8. Verfahren nach einem der vorhergehenden Ansprüche, **dadurch gekennzeichnet, dass** jeweils zugeordnete Kommissionieraufträge durch zwei oder mehr Kommissionierpersonen (6, 6') gleichzeitig entlang der entgegen gesetzt verlaufenden Kommissionierwege (19, 20) abgearbeitet werden, wobei die jeweiligen Kommissionieraufträge an den einander gegenüberliegenden Enden der Kommissionierwege (19, 20) gestartet werden, sodass die Kommissionieraufträge durch die Kommissionierpersonen (6, 6') in entgegen gesetzten Richtungen entlang der jeweiligen Kommissionierwege (19, 20) abgearbeitet werden.

9. Verfahren nach Anspruch 8, **dadurch gekennzeichnet, dass** die jeweilige Zuordnung von Kommissionieraufträgen zu den gleichzeitig oder parallel arbeitenden Kommissionierpersonen (6, 6') durch von den Kommissionierpersonen (6, 6') unterscheidbare Signalisierungen eines Kommissionierpersonenleitsystems (23) vorgenommen wird.

10. Verfahren nach einem der vorhergehenden Ansprüche, **dadurch gekennzeichnet, dass** weitere Pufferplätze (26) für Auftragsbehälter (7) in einem zumindest annähernd rechten Winkel an wenigstens eine der Bereitstellungsvorrichtungen (12, 13) angereiht sind, sodass eine in Draufsicht im Wesentlichen L- oder U-förmige Kommissioniervorrichtung (11) gebildet ist.

11. Verfahren nach einem der vorhergehenden Ansprüche, **dadurch gekennzeichnet, dass** die Strecke (18) oder der Kommissionierweg (19; 20) zwischen den zur Puffervorrichtung (16) distal gegenüberliegenden Bereitstellungsvorrichtungen (12, 13) eine Länge zwischen 2 m und 20 m, insbesondere zwischen 3 m und 10 m aufweist.

12. Verfahren nach Anspruch 1 oder 2, **dadurch gekennzeichnet, dass** die genannten Verfahrensschritte Entnehmen, Aufteilen und Quittieren beziehungsweise die genannten Verfahrensschritte Entnehmen, Quittieren und Aufteilen, sooft wiederholt werden, bis die Kommissionieraufträge vollständig abgearbeitet sind, wobei nach jeder abgeschlossenen Kommissioniersequenz ein Richtungswechsel für die Kommissionierperson (6) in Bezug auf den Kommissionierweg (19; 20) zwischen den Bereitstellungsvorrichtungen (12, 13) ausgeführt wird.

13. Kommissioniervorrichtung (11) zur Durchführung des Verfahrens nach einem oder mehreren der vorgehenden Ansprüche zum Kommissionieren von Artikeln aus Lagerbehältern (5) in Auftragsbehälter (7) durch eine Kommissionierperson (6) gemäß vorgegebenen Kommissionieraufträgen, welche eine erste und wenigstens eine weitere Bereitstellungsvorrichtung (12, 13) für zu- und abzufördernde Lagerbehälter (5), und eine Puffervorrichtung (16) für die Auftragsbehälter (7) mit zwischen den Bereitstellungsvorrichtungen (12) angeordneten Pufferplätzen (17) für die Auftragsbehälter (7) umfasst,
**dadurch gekennzeichnet, dass**
die Strecke (18) zwischen den zueinander distanzierten Bereitstellungsvorrichtungen (12, 13) einen von der ersten Bereitstellungsvorrichtung (12) zu der weiteren Bereitstellungsvorrichtung (13) führenden Kommissionierweg (19) und einen von der weiteren Bereitstellungsvorrichtung (13) zu der ersten Bereitstellungsvorrichtung (12) führenden Kommissionierweg (20) für die Kommissionierperson (6) definiert, und dass an den oder im Nahbereich der zueinander distanzierten Bereitstellungsvorrichtungen (12, 13) für Lagerbehälter (5) jeweils wenigstens ein elektromechanisch oder softwaretechnisch ausgeführtes Eingabemittel (21, 22) zum manuellen Quittieren eines ausgeführten Kommissionierauftrages ausgebildet ist, und, dass eine Steuervorrichtung ausgebildet ist, welche infolge einer Betätigung des Eingabemittels (22) an der ersten Bereitstellungsvorrichtung (12) zum Auslösen eines Austausches oder einer Zuführung eines Lagerbehälters (5) an der weiteren Bereitstellungsvorrichtung (13) am anderen Ende des Kommissionierweges (19; 20), und vice versa, eingerichtet ist.

## Claims

1. Method for picking articles (3, 4) from storage containers (5) in order containers (7) by a picking person (6) in accordance with predefined picking orders with a picking device (11), which comprises a first and at least another provision device (12, 13) for storage containers (5) to be delivered and to be dispatched and a buffer device (16) for the order container (7) with buffer locations (17) arranged between the provision devices (12, 13) for the order containers (7), wherein the route (18) between the provision devices (12, 13) distanced from one another defines a picking route (19, 20) for the picking person (6), **characterized by**
- the removal of an amount of articles (3) from a storage container (5) according to the order at the first provision device (12),
- an order-specific division of the removed amount of articles (3) into at least one of the order containers (7) arranged along the picking route (19) leading to the other provision device (13),
- acknowledgement of the picking order by the picking person (6) at or in the proximity of the other provision device (13),
- the removal of an amount of articles (4) from a storage container (5) according to the order at the other provision device (13),
- the order-specific division of the removed amount of articles (4) into at least one of the order containers (7) arranged along the picking route (20) leading to the first provision device (12) starting at the other provision device (13) in the direction of the first provision device (12),
- the acknowledgement of the picking order by the picking person (6) at the or in the proximity of the first provision device (12).

2. Method for picking articles (3, 4) from storage containers (5) in order containers (7) by a picking person (6) in accordance with predefined picking orders with a picking device (11), which comprises a first and at least another provision device (12, 13) for storage containers (5) to be delivered and to be dispatched and a buffer device (16) for the order container (7) with buffer locations (17) arranged between the provision devices (12, 13) for the order containers (7), wherein the route (18) between the provision devices (12, 13) distanced from one another defines a picking route (19, 20) for the picking person (6), **characterized by**
- the removal of an amount of articles (3) from a storage container (5) by the picking person (6) according to the order at the first provision device (12),
- active acknowledgement of the removed amount of articles (3) according to the order by the picking person (6) by means of a electromechanical or software-based input means (22) at the or in the proximity of the first provision device (12), whereupon an automatic replacement of the storage container (5) at the first provision device (12) with another storage container (5) is initiated by an electronic control device,
- order-specific division of the removed amount of articles (3) by the picking person (6) into at least one of the order containers (7) arranged along the picking route (19) leading to the other provision device (13),
- removal of an amount of articles (4) from a storage container (5) according to the order by the picking person (6) at the other provision device (13),
- active acknowledgement of the removed amount of articles (4) according to the order by the picking person (6) by means of an electromechanical or software-based input means (21) at the or in the proximity of the other provision device (13), whereupon an automatic replacement of the storage container (5) at the other provision device (13) with another storage container (5) is initiated by the electronic control device,
- order-specific division of the removed amount of articles in at least one of the order containers (7) arranged along the picking route (20) leading to the first provision device (12) starting from the other provision device (13) in the direction of the first provision device (12).

3. Method according to claim 1, **characterized by** a processing start of a picking order at a first end of the picking route (19, 20) and by the acknowledgement of the completion of this picking order at the other opposite end of the picking route (19, 20), whereupon another picking order is started at the other end of the picking route (19, 20) and after its completion, acknowledgement is made at the first end.

4. Method according to claim 1 or 2, **characterized by** the triggering of a provision process for another storage container (5) at the respective other end of the picking route (19, 20) due to the acknowledgement of a picking order executed according to the order on the opposite end of the picking route (19, 20).

5. Method according to any one of the preceding claims, **characterized in that** the acknowledgement of an executed picking order is performed by manually activating an electromechanical or software-based input means (21, 22) within an arm's reach around each of the provision devices (12, 13) for storage containers (5).

6. Method according to any one of the preceding claims, **characterized in that** the articles (3, 4) removed from the storage containers (5) are picked into order containers (7) arranged along the picking route (19, 20) next to each other and arranged on top of each other on at least two levels.

7. Method according to any one of the preceding claims, **characterized in that** a picking person management system (23) is provided, with which the picking orders to be processed are communicated to the picking person (6), wherein the picking person management system (23) comprises signalisation means (24, 25) that can be perceived by the picking person (6), via which the picking person (6) is informed about order containers (7) to be selectively loaded and of the number of the respective articles (3, 4) to be set down.

8. Method according to any one of the preceding claims, **characterized in that** respectively assigned picking orders are processed by two or more picking persons (6, 6') at the same time along the picking route (19, 20) running in opposing directions, wherein the respective picking orders are started at the opposing ends of the picking route (19, 20) so that the picking orders are processed by the picking persons (6, 6') in opposing directions along the respective picking routes (19, 20).

9. Method according to claim 8, **characterized in that** the respective assignment of picking orders to the picking persons (6, 6') working simultaneously or in parallel is performed by the signalisations of a picking person management system (23) that can be distinguished by the picking persons (6, 6').

10. Method according to any one of the preceding claims, **characterized in that** further buffer locations (26) for the order containers (7) are lined up in an at least approximate right angle at at least one of the provision devices (12, 13) so that, in a top view, a substantially L-shaped or U-shaped picking device (11) is formed.

11. Method, according to any one of the preceding claims, **characterized in that** the route (18) or the picking path (19, 20) between the provision devices (12, 13) located distally opposite to the buffer device (16) have a length between 2 m and 20 m, preferably between 3 m and 10 m.

12. Method according to claim 1 or 2, **characterized in that** the aforementioned method steps, removal, division and acknowledgement, and the aforementioned method steps, removal, acknowledgement and division, are repeated so often until the picking orders have been fully processed, wherein after each completed picking sequence a change in direction for the picking person (6) with relation to the picking route (19, 20) between the provision devices (12, 13) is carried out.

13. Picking device (11) to carry out the method according to one or a plurality of the preceding claims for picking articles from storage containers (5) into order containers (7) by a picking person (6) in accordance with predefined picking orders, which comprises a first and at least another provision device (12, 13) for storage containers (5) to be delivered and to be dispatched and a buffer device (16) for the order containers (7) with buffer locations (17) for the order device (7) arranged between the provision devices (12), **characterized in that**
the route (18) between the provision devices (12, 13) distanced from one another defines a picking route (19) leading from the first provision device (12) to the other provision device (13) and a picking route (19) for the picking person (6) leading from the other provision device (13) to the first provision device (12),
and, that at or in the proximity of the provision devices (12, 13) for storage containers (5) distanced from one another, at least one electromechanical or software-based input means (21, 22) is designed to manually acknowledge an executed picking order respectively, and that a control device is provided, which, as a result of activating the input means (22) at the first provision device (12), is designed to trigger the replacement or the feeding of a storage container (5) at the other provision device (13) at the other end of the picking route (19, 20) and vice versa.

## Revendications

1. Procédé de préparation de commandes d'articles (3, 4) en provenance de conteneurs de stockage (5) dans des conteneurs d'ordres (7) par une personne chargée des préparations (6) selon des ordres de préparation de commandes prédéfinis, avec un dispositif de préparation de commandes (11) qui comprend un premier et au moins un autre dispositif de mise à disposition (12, 13) pour des conteneurs de stockage (5) à introduire et à évacuer, et un dispositif tampon (16) pour les conteneurs d'ordres (7) avec des emplacements tampons (17), disposés entre les dispositifs de mise à disposition (12, 13), pour les conteneurs d'ordres (7), le trajet (18) entre les dispositifs de mise à disposition (12, 13) espacés les uns des autres définissant un chemin de préparation de commandes (19, 20) pour la personne chargée des préparations (6), **caractérisé par**
- l'enlèvement d'une quantité d'articles (3), selon l'ordre, à partir d'un conteneur de stockage (5) sur le premier dispositif de mise à disposition (12),
- la répartition spécifique à l'ordre de la quantité prélevée d'articles (3) dans au moins un des conteneurs d'ordres (7) disposés le long du chemin de préparation de commandes (19) conduisant à l'autre dispositif de mise à disposition (13),
- l'acquittement, par la personne chargée des préparations (6), de l'ordre de préparation de commandes sur ou à proximité de l'autre dispositif de mise à disposition (13),
- l'enlèvement d'une quantité d'articles (4), selon l'ordre, à partir d'un conteneur de stockage (5) sur l'autre dispositif de mise à disposition (13),
- la répartition spécifique à l'ordre de la quantité prélevée d'articles (4) dans au moins un des conteneurs d'ordres (7) disposés le long du chemin de préparation de commandes (20) conduisant au premier dispositif de mise à disposition (12), à partir de l'autre dispositif de mise à disposition (13) en direction du premier dispositif de mise à disposition (12),
- l'acquittement, par la personne chargée des préparations (6), de l'ordre de préparation de commandes exécuté sur ou à proximité du premier dispositif de mise à disposition (12).

2. Procédé de préparation de commandes d'articles (3, 4) en provenance de conteneurs de stockage (5) dans des conteneurs d'ordres (7) par une personne chargée des préparations (6) selon des ordres de préparation de commandes prédéfinis, avec un dispositif de préparation de commandes (11) qui comprend un premier et au moins un autre dispositif de mise à disposition (12, 13) pour des conteneurs de stockage (5) à introduire et à évacuer, et un dispositif tampon (16) pour les conteneurs d'ordres (7) avec des emplacements tampons (17), disposés entre les dispositifs de mise à disposition (12, 13), pour les conteneurs d'ordres (7), le trajet (18) entre les dispositifs de mise à disposition (12, 13) espacés les uns des autres définissant un chemin de préparation de commandes (19, 20) pour la personne chargée des préparations (6), **caractérisé par**
- l'enlèvement, par la personne chargée des préparations (6), d'une quantité d'articles (3) selon l'ordre à partir d'un conteneur de stockage (5) sur le premier dispositif de mise à disposition (12),
- l'acquittement actif, par la personne chargée des préparations (6), de la quantité prélevée selon l'ordre d'articles (3) au moyen d'un moyen d'entrée (22) réalisé de façon électromécanique ou par voie logicielle, sur ou à proximité du premier dispositif de mise à disposition (12), après quoi un dispositif de commande électronique lance un remplacement automatique du conteneur de stockage (5) sur le premier dispositif de mise à disposition (12) par un autre conteneur de stockage (5),
- la répartition spécifique à l'ordre, par la personne chargée des préparations (6), de la quantité prélevée d'articles (3) dans au moins un des conteneurs d'ordres (7) disposés le long du chemin de préparation de commandes (19) conduisant à l'autre dispositif de mise à disposition (13),
- l'enlèvement, par la personne chargée des préparations (6), d'une quantité d'articles (4), selon l'ordre à partir d'un conteneur de stockage (5) sur l'autre dispositif de mise à disposition (13),
- l'acquittement actif, par la personne chargée des préparations (6), de la quantité d'articles (4) prélevée selon l'ordre au moyen d'un moyen d'entrée (21) réalisé de façon électromécanique ou par voie logicielle, sur ou à proximité de l'autre dispositif de mise à disposition (13), après quoi un dispositif de commande électronique lance un remplacement automatique du conteneur de stockage (5) sur l'autre dispositif de mise à disposition (13) par un autre conteneur de stockage (5),
- la répartition spécifique à l'ordre de la quantité prélevée d'articles dans au moins un des conteneurs d'ordres (7) disposés le long du chemin de préparation de commandes (20) conduisant au premier dispositif de mise à disposition (12), à partir de l'autre dispositif de mise à disposition (13) en direction du premier dispositif de mise à disposition (12).

3. Procédé selon la revendication 1, **caractérisé par** un début de traitement d'un ordre de préparation de commandes à une première extrémité du chemin de préparation de commandes (19 ; 20) et par l'acquittement de l'achèvement de cet ordre de préparation de commandes à l'autre extrémité opposée du chemin de préparation de commandes (19 ; 20), après quoi un autre ordre de préparation de commandes est lancé à l'autre extrémité du chemin de préparation de commandes (19 ; 20) et est acquittée après son achèvement à la première extrémité.

4. Procédé selon la revendication 1 ou 2, **caractérisé par** le déclenchement d'un processus de mise à disposition pour un autre conteneur de stockage (5) respectivement à l'autre extrémité du chemin de préparation de commandes (19 ; 20) à la suite de l'acquittement d'un ordre de préparation de commandes, exécuté selon l'ordre, à l'extrémité opposée du chemin de préparation de commandes (19 ; 20).

5. Procédé selon l'une des revendications précédentes, **caractérisé en ce que** l'acquittement d'un ordre de préparation de commandes exécuté est entrepris par l'actionnement manuel d'un moyen d'entrée (21, 22) réalisé de façon électromécanique ou par voie logicielle, à portée de main autour de chacun des dispositifs de mise à disposition (12, 13) pour des conteneurs de stockage (5).

6. Procédé selon l'une des revendications précédentes, **caractérisé en ce que** les articles (3, 4) prélevés à partir de conteneurs de stockage (5) sont préparés dans des conteneurs d'ordres (7) disposés de façon juxtaposée le long du chemin de préparation de commandes (19 ; 20) et de façon superposée les uns aux autres sur au moins deux niveaux.

7. Procédé selon l'une des revendications précédentes, **caractérisé en ce qu'**il est constitué un système de guidage de personne chargée des préparations (23) avec lequel les ordres de préparation de commandes à traiter sont communiqués à la personne chargée des préparations (6), le système de guidage de personne chargée des préparations (23) comprenant des moyens de signalisation (24, 25) pouvant être perçus par la personne chargée des préparations (6) et par le biais desquels la personne chargée des préparations (6) est informée sur des conteneurs d'ordres (7) à alimenter de façon sélective et sur le nombre des articles (3 ; 4) à déposer respectivement.

8. Procédé selon l'une des revendications précédentes, **caractérisé en ce que** des ordres de préparation de commandes respectivement affectés sont traités simultanément par deux personnes chargées des préparations (6, 6') ou plus le long des chemins de préparation de commandes (19 ; 20) placés en sens inverse, les ordres de préparation de commandes respectifs étant lancés aux extrémités réciproquement opposées des chemins de préparation de commandes (19 ; 20) de telle sorte que les ordres de préparation de commandes sont traités par les personnes chargées des préparations (6, 6') dans des directions opposées le long des chemins de préparation de commandes (19 ; 20) respectifs.

9. Procédé selon la revendication 8, **caractérisé en ce que** l'affectation respective d'ordres de préparation de commandes aux personnes chargées des préparations (6, 6') travaillant simultanément ou en parallèle est entreprise par des signalisations d'un système de guidage de personne chargée des préparations (23) qui peuvent être distinguées par les personnes chargées des préparations (6, 6').

10. Procédé selon l'une des revendications précédentes, **caractérisé en ce que** d'autres emplacements tampons (26) pour des conteneurs d'ordres (7) sont ajoutés, en formant un angle au moins approximativement droit, à au moins un des dispositifs de mise à disposition (12, 13) de telle sorte qu'il est formé un dispositif de préparation de commandes (11) essentiellement en forme de L ou de U vu du dessus.

11. Procédé selon l'une des revendications précédentes, **caractérisé en ce que** le trajet (18) ou le chemin de préparation de commandes (19 ; 20) entre les dispositifs de mise à disposition (12, 13), opposés de façon distale par rapport au dispositif tampon (16), présente une longueur entre 2 m et 20 m, en particulier entre 3 m et 10 m.

12. Procédé selon la revendication 1 ou 2, **caractérisé en ce que** les étapes de procédé citées, à savoir l'enlèvement, la répartition et l'acquittement ou respectivement les étapes de procédé citées, à savoir l'enlèvement, l'acquittement et la répartition, sont répétées jusqu'à ce que les ordres de préparation de commandes soient complètement traités, un changement de direction pour la personne chargée des préparations (6) étant, en ce qui concerne le chemin de préparation de commandes (19 ; 20) entre les dispositifs de mise à disposition (12, 13), réalisé après chaque séquence de préparation de commandes achevée.

13. Dispositif de préparation de commandes (11) destiné à l'exécution du procédé selon l'une ou plusieurs des revendications précédentes pour la préparation de commandes d'articles en provenance de conteneurs de stockage (5) dans des conteneurs d'ordres (7) par une personne chargée des préparations (6) selon des ordres de préparation de commandes prédéfinis, qui comprend un premier et au moins un autre dispositif de mise à disposition (12, 13) pour des conteneurs de stockage (5) à introduire et à évacuer, et un dispositif tampon (16) pour les conteneurs d'ordres (7) avec des emplacements tampons (17), disposés entre les dispositifs de mise à disposition (12, 13), pour les conteneurs d'ordres (7),
**caractérisé en ce que**
le trajet (18) entre les dispositifs de mise à disposition (12, 13) espacés les uns des autres définit pour la personne chargée des préparations (6) un chemin de préparation de commandes (19) conduisant du premier dispositif de mise à disposition (12) à l'autre dispositif de mise à disposition (13) et un chemin de préparation de commandes (20) conduisant de l'autre dispositif de mise à disposition (13) au premier dispositif de mise à disposition (12), et
**en ce que**, sur ou au voisinage des dispositifs de mise à disposition (12, 13), espacés les uns des autres, pour des conteneurs de stockage (5), il est constitué respectivement au moins un moyen d'entrée (21, 22) réalisé de façon électromécanique ou par voie logicielle pour l'acquittement manuel d'un ordre de préparation de commandes réalisé, et
**en ce qu'**il est constitué un dispositif de commande qui, à la suite d'un actionnement du moyen d'entrée (22) sur le premier dispositif de mise à disposition (12), est agencé pour le déclenchement d'un remplacement ou d'un acheminement d'un conteneur de stockage (5) sur l'autre dispositif de mise à disposition (13) à l'autre extrémité du chemin de préparation de commandes (19 ; 20) et vice-versa.
